# EUROPEAN PATENT APPLICATION

(11) **EP 4 838 867 A1**
(43) Date of publication of application: **11.11.2026**
(21) Application number: 24917344.4
(22) Date of filing: 30.12.2024
(51) Int. Cl.: H04L 67/60

(54) **ELECTRONIC DEVICE CONFIGURED TO RETURN LATEST SNAPSHOT AND CONTROL METHOD THEREOF**

(30) Priority: 08.01.2024 KR 20240002990; 24.01.2024 KR 20240011154
(71) Applicant: Samsung Electronics Co., Ltd., Suwon-si, Gyeonggi-do 16677 (KR)
(72) Inventor: KIM, Youngjin, Suwon-si Gyeonggi-do 16677 (KR)
(74) Representative: Gulde & Partner
(86) International application number: PCT/KR2024/021481
(87) International publication number: WO 2025/150750

(57) **Abstract**

Provided are an electronic device configured to return a latest snapshot and a control method thereof. The electronic device according to an embodiment of the present disclosure may comprise instructions configured to: acquire a request for providing data for a query from a user client through a communication module; on the basis of the acquisition of the data provision request, identify URI information included in the data provision request of the user, wherein the URI information includes state information of the query and number information of the query; access a first snapshot or a second snapshot stored in a storage server on the basis of the identification of the URI information; and return the first snapshot or the second snapshot to the user client.

## Description

### [Technical Field]

The disclosure relates to an electronic device configured to return a latest snapshot and a control method thereof.

### [Background Art]

There is an increasing demand for technologies for effectively processing and utilizing large amounts of data using electronic devices (e.g., servers). To increase utility of such electronic devices and to satisfy diverse user demands, communication service providers or electronic device manufacturers are providing various functions through electronic devices and are competitively developing the electronic devices in order to differentiate themselves from other companies. Accordingly, various functions provided through electronic devices are becoming increasingly sophisticated. Serverless may refer to an architecture, as one model of cloud computing, in which a developer does not need to directly manage servers.

### [Detailed Description of the Invention]

### [Technical Problem]

According to the related art, a snapshot generated in a Trino server may be directly transmitted to a user client. Accordingly, when the number of user requests increases or a query requiring a very long processing time is received from the user, the number of snapshots stored in a storage server (e.g., Redis) may increase proportionally. According to the related art, when the number of snapshots increases, the number of keys stored in the storage server storing the snapshots increases, thereby increasing overhead for managing a corresponding key space. In addition, due to a characteristic of an asynchronous structure, a request of a user client is frequently made before an actual processing status (e.g., a query status) is reached in the Trino server, and since snapshots are generated in an order of progress of a query, in order for the user client or a server (e.g., a communication server) to access an actually generated snapshot according to a current progress the query status, all snapshots generated prior to the currently generated snapshot need to be traversed. According to the related art, since at least one snapshot (e.g., a snapshot not including query data) that a server (e.g., a communication server) does not need to access in order to obtain query data must also be traversed, overhead for the user client to obtain a query result may increase.

### [Technical Solution]

According to an embodiment of the disclosure, an electronic device and a serverless system capable of efficiently managing a key space of a server (e.g., a storage server) may be provided by, with respect to at least one snapshot (e.g., a snapshot not including query data) that a server (e.g., a communication server) does not need to access in order to obtain query data, updating the snapshot (e.g., overwriting an existing snapshot with a new snapshot) and storing only the latest snapshot in the server (e.g., the storage server).

According to an embodiment of the disclosure, an electronic device (e.g., a communication server) may include a communication module, at least one processor, and memory, wherein the processor includes instructions configured to, when executed, cause the electronic device to obtain a request to provide data for a query from a user client through the communication module, identify, based on the obtaining of the request to provide data, URI information included in the request to provide data of the user client, wherein the URI information includes status information of the query and number information of the query, and access, based on the identification of the URI information, a first snapshot or a second snapshot stored in a storage server, wherein the first snapshot is updated to another snapshot that does not include result data for the query, which is generated according to processing of the query, and the second snapshot includes a snapshot including first result data for the query.

According to an embodiment of the disclosure, a method may include obtaining a request to provide data for a query from a user client, identifying, based on the obtaining of the request to provide data, URI information included in the request to provide data of the user client, wherein the URI information includes status information of the query and number information of the query, and accessing, based on the identification of the URI information, a first snapshot or a second snapshot stored in a storage server, wherein the first snapshot is updated with another snapshot that does not include result data for the query, which is generated according to processing of the query, and the second snapshot includes a snapshot including first result data for the query.

### [Advantageous Effects]

### [Brief Description of Drawings]

FIG. 1 is a block diagram of an electronic device in a network environment according to various embodiments of the disclosure.
FIG. 2 is an exemplary diagram illustrating a serverless system according to an embodiment of the disclosure.
FIG. 3 is an exemplary diagram illustrating a function or operation in which an electronic device (e.g., a communication server) accesses query data using a latest snapshot according to an embodiment of the disclosure.
FIG. 4 is an exemplary diagram illustrating types of snapshots and types of snapshots that may be managed as latest snapshots according to an embodiment of the disclosure.
FIG. 5 is an exemplary diagram illustrating a function or operation in which, when a query status requested by a user client is higher than a status of a snapshot stored in a storage server, an electronic device according to an embodiment of the disclosure returns an error value to the user client.
FIG. 6 is an exemplary diagram illustrating a function or operation in which, when a query status requested by a user client is equal to or lower than a status of a snapshot stored in a storage server, based on the status of the snapshot stored in the storage server being a queued status, an electronic device according to an embodiment of the disclosure returns an error value or a latest snapshot to the user client.
FIGS. 7A and 7B are exemplary diagrams illustrating a function or operation in which, when a query status requested by a user client is equal to or lower than a status of a snapshot stored in a storage server, based on the status of the snapshot stored in the storage server being an execution status, an electronic device according to an embodiment of the disclosure returns, to the user client, information about one of an error value, a latest snapshot, or a snapshot including query data.
FIG. 8 is an exemplary diagram illustrating a function or operation in which a server (e.g., a processing server) according to an embodiment of the disclosure overwrites an existing snapshot with a current snapshot and stores only a latest snapshot in a server (e.g., a storage server).
FIG. 9 is an exemplary diagram illustrating a function or operation in which an electronic device (e.g., a communication server) according to an embodiment of the disclosure accesses a snapshot including query data through a latest snapshot.

### [Mode for Carrying out the Invention]

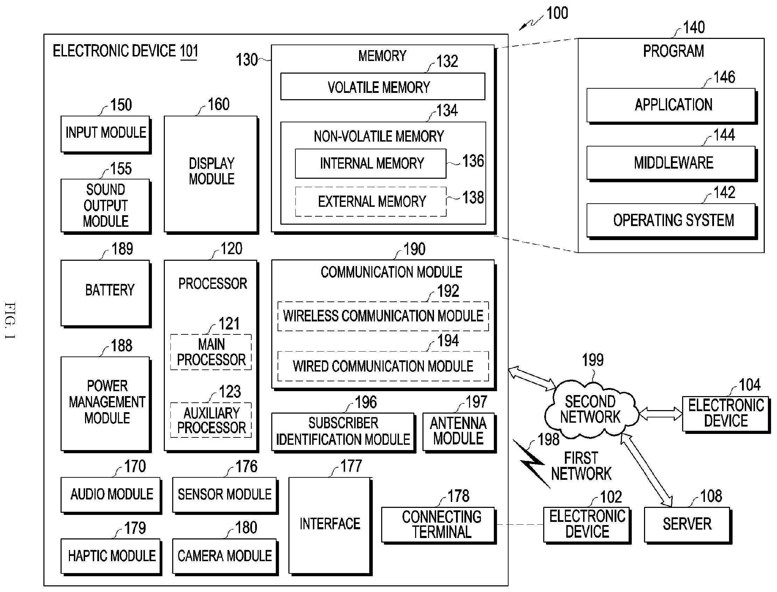

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

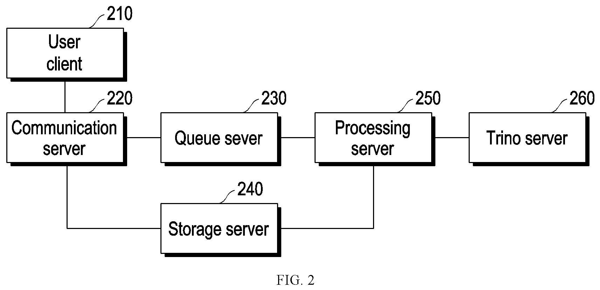

FIG. 2 is an exemplary diagram illustrating a serverless system 200 according to an embodiment of the disclosure.

Referring to FIG. 2, the serverless system 200 according to an embodiment of the disclosure may include at least one of a user client 210, a communication server 220, a queue server 230, a storage server 240, a processing server 250, and/or a Trino server 260.

The user client 210 according to an embodiment of the disclosure may transmit a query to the communication server 220. The user client 210 according to an embodiment of the disclosure may transmit a POST request and/or a GET request including nextURI information to the communication server 220. The nextURI information according to an embodiment of the disclosure may be included in an initial snapshot transmitted from the communication server 220 or in a snapshot stored in the storage server 240. Since the user client 210 according to an embodiment of the disclosure cannot directly access the Trino server 260, the storage server 240 may be needed in the serverless system 200 according to an embodiment of the disclosure. The snapshot according to an embodiment of the disclosure may refer to data existing at an address indicated by the nextURI information. The snapshot according to an embodiment of the disclosure may be defined in a key-value relationship and may be stored in the storage server 240. For example, a key (e.g., a path) of an initial snapshot generated by the communication server 220 according to an embodiment of the disclosure may be expressed as "userID/queryID/latest", and a value may be expressed as snapshot("id": "xxx", "NextURI": "communication server address/userID/queryID/QUEUED/0", "QueryStat": "xxx"). The key and the value according to an embodiment of the disclosure may be defined in a relationship such as "userID/queryID/latest": snapshot("id": "xxx", "NextURI": "communication server address/userID/queryID/QUEUED/0", "QueryStat": "xxx"), and may be stored in the storage server 240. The nextURI information according to an embodiment of the disclosure may refer to a URL used to retrieve the next query status. The nextURI information according to an embodiment of the disclosure may be included in a GET request of the user client 210 and transmitted to the communication server 220. The user client 210 according to an embodiment of the disclosure may obtain query data by repeatedly transmitting the GET request to the communication server 220 until the nextURI information no longer exists.

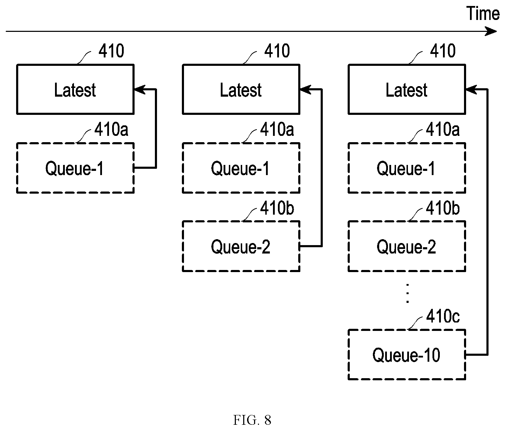

The communication server 220 according to an embodiment of the disclosure may obtain a POST request for submitting a query from the user client 210. The communication server 220 according to an embodiment of the disclosure may extract a query statement from the POST request and submit the query statement to the queue server 230. The communication server 220 according to an embodiment of the disclosure may generate an initial snapshot (e.g., the initial snapshot 410a of FIG. 8) and store the initial snapshot in the storage server 240 to execute the query asynchronously. According to an embodiment of the disclosure, since an actual query has not yet been transmitted to the Trino server 260, no snapshot has yet been generated by the Trino server 260, and a time taken until the Trino server 260 generates an initial snapshot may result in a delay experienced by the user client 210. Accordingly, in order to reduce such a delay time, the initial snapshot may be generated by the communication server 220. The initial snapshot (e.g., the initial snapshot 410a of FIG. 8) according to an embodiment of the disclosure may be stored in the storage server 240. In this case, a storage path (e.g., a key of the storage server 240) may be expressed as "userID/queryID/latest", and a stored value (e.g., a value of the storage server 240) may include information such as an ID, a nextURI, and a query status. Here, the nextURI may be expressed as "communication server address/queryID/userID/QUEUED/0". When the initial snapshot according to an embodiment of the disclosure is represented in a key-value format, it may be expressed as shown in Table 1 below. The communication server 220 according to an embodiment of the disclosure may return the value (e.g., the initial snapshot) to the user client 210 in the key-value representation described below.

**[Table 1]**

| |
|---|
| "userID/queryID/latest": snapshot("id": "xxx", "NextURI": "communication server address/userID/queryID/QUEUED/0", "QueryStat": "xxx") |

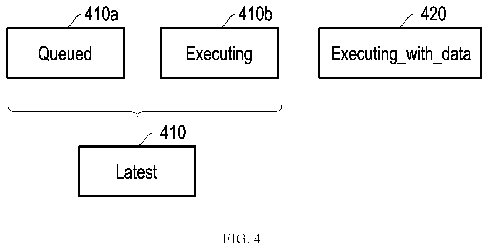

The communication server 220 according to an embodiment of the disclosure may add a generated initial snapshot to a POST response and transmit the POST response to the user client 210. The user client 210 according to an embodiment of the disclosure may identify the nextURI from the initial snapshot received from the communication server 220, and may transmit a GET request including the identified nextURI information to the communication server 220. The communication server 220 according to an embodiment of the disclosure may retrieve a snapshot corresponding to the nextURI from the storage server 240, add the snapshot to a POST response, and transmit the POST response to the user client 210. Such a process may be repeatedly performed until the nextURI information no longer exists in the snapshot. Snapshots according to an embodiment of the disclosure may be generated in the Trino server 260 based on a time point at which a request is received by the Trino server 260. Since a snapshot according to an embodiment of the disclosure includes information such as a query progress (%), a size of data read to perform a query, and a query execution time, snapshots generated in the past and a currently generated snapshot may be different from each other based on a current time point. The processing server 250 according to an embodiment of the disclosure may load a task when the task exists in the queue server 230, and may submit the task to the Trino server 260 to perform a query. A process of performing the query between the processing server 250 and the Trino server 260 according to an embodiment of the disclosure may be substantially the same as a query processing process between the user client 210 and the communication server 220. For example, the processing server 250 according to an embodiment of the disclosure may transmit a POST request to the Trino server 260. The Trino server 260 according to an embodiment of the disclosure may, when receiving the POST request from the processing server 250, generate a snapshot and return the snapshot to the processing server 250. For example, nextURI information returned from the Trino server 260 to the processing server 250 according to an embodiment of the disclosure may be expressed as "Trino address/Trino query ID/ status /number". The processing server 250 according to an embodiment of the disclosure may determine whether query data exists in a data field of the snapshot obtained from the Trino server 260, and may update nextURI information of the snapshot to "communication server address/query ID/user ID/ status /number" and store the same in the storage server 240. For example, when query data does not exist in the data field of the snapshot, a key may be expressed as "userID/queryID/latest", and a value may be expressed as content (e.g., "communication server address/query ID/user ID/ status /number") of the modified snapshot. Between the processing server 250 and the Trino server 260 according to an embodiment of the disclosure, a GET request may be repeatedly performed. The processing server 250 according to an embodiment of the disclosure may, based on whether query data exists in the snapshot, overwrite a value in "userID/queryID/latest" (i.e., a key) when the query data does not exist in the snapshot. According to an embodiment of the disclosure, when the value is overwritten in "userID/queryID/latest", a nextURI number of the snapshot may be continuously increased. FIG. 4 is an exemplary diagram illustrating types of snapshots and types of snapshots that may be managed as latest snapshots according to an embodiment of the disclosure. Referring to FIG. 4, according to an embodiment of the disclosure, a latest snapshot (e.g., the first snapshot 410) may be maintained only in a snapshot (e.g., the (1-1)th snapshot 410a) in a queued status in which query data does not exist and in a snapshot (e.g., the (1-2)th snapshot 410b) in an executing status in which query data is not included. The processing server 250 according to an embodiment of the disclosure may store all snapshots (e.g., snapshots including query result data) generated by the Trino server 260 in the storage server 240 in a status (executing_with_data) in which query result data exists in the snapshot. The processing server 250 according to an embodiment of the disclosure may determine whether query data exists in a designated snapshot.

The processing server 250 according to an embodiment of the disclosure may, when query data exists in a data field of a snapshot obtained from the Trino server 260, store, in the storage server 240, a key expressed as "userID/queryID/ status /number". According to an embodiment of the disclosure, when query data (e.g., query result data) exists in the data field of the snapshot obtained from the Trino server 260, all snapshots may be stored in the storage server 240, unlike a case in which query data does not exist in the data field of the snapshot obtained from the Trino server 260. For example, assuming that data is included starting from a designated snapshot expressed as "Executing-2" and that processing of a query is completed at "Executing-5", a key-value relationship of snapshots stored in the storage server 240 may be stored as shown in Table 2 below. In Table 2 below, for convenience of description, only a query status and a snapshot number among pieces of information included in nextURI are shown as a value.

**[Table 2]**

| |
|---|
| "userID/queryID/latest": [EXECUTING/2] |
| "userID/queryID/EXECUTING/2": "EXECUTING/3" |
| "userID/queryID/EXECUTING/3": "EXECUTING/4" |
| "userID/queryID/EXECUTING/4": "EXECUTING/5" |
| "userID/queryID/EXECUTING/5": "" |

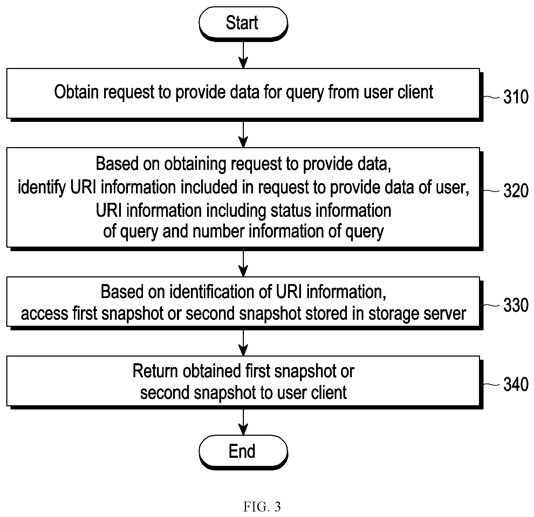

As described above, the processing server 250 according to an embodiment of the disclosure may update snapshots stored in the storage server 240 such that only a latest snapshot (e.g., "userID/queryID/latest": [EXECUTING/2]) is stored in the storage server 240, and thus the communication server 220 and/or the user client 210 may access a snapshot (e.g., a second snapshot 420) including query data through at least two GET requests. According to such a feature of the disclosure, a relatively shorter delay time may be ensured as compared to a case in which, as in the related art, snapshots not including query data are sequentially accessed and then a snapshot (e.g., the second snapshot 420) including query data is accessed. According to an embodiment of the disclosure, snapshots in which query data does not exist may be information that simply records the progress of a query and thus may not affect an actual query result, and thus there may not cause any problem even when duplicated snapshots are continuously returned to the user client 210. FIG. 3 is an exemplary diagram illustrating a function or operation in which an electronic device 101 (e.g., the communication server 220) accesses query data using a latest snapshot according to an embodiment of the disclosure.

An electronic device 101 (e.g., the communication server 220) according to an embodiment of the disclosure may, in operation 310, obtain a request to provide data (e.g., a GET request) for a query from a user client. The user client 210 according to an embodiment of the disclosure may transmit a POST request and/or a GET request including nextURI information to the communication server 220. The nextURI information according to an embodiment of the disclosure may be included in the GET request of the user client 210 and transmitted to the communication server 220. The communication server 220 according to an embodiment of the disclosure may extract a query statement from the POST request and submit the query statement to a queue server 230. The communication server 220 according to an embodiment of the disclosure may generate an initial snapshot (e.g., the initial snapshot 410a of FIG. 8) and store the initial snapshot in a storage server 240, in order to execute the query asynchronously.

The electronic device 101 (e.g., the communication server 220) according to an embodiment of the disclosure may, in operation 320, identify URI information included in the request to provide data of the user client 210, based on the acquisition of the request to provide data. The URI information according to an embodiment of the disclosure may be a nextURI. The nextURI information according to an embodiment of the disclosure may be included in an initial snapshot transmitted from the communication server 220 or in a snapshot stored in the storage server 240.

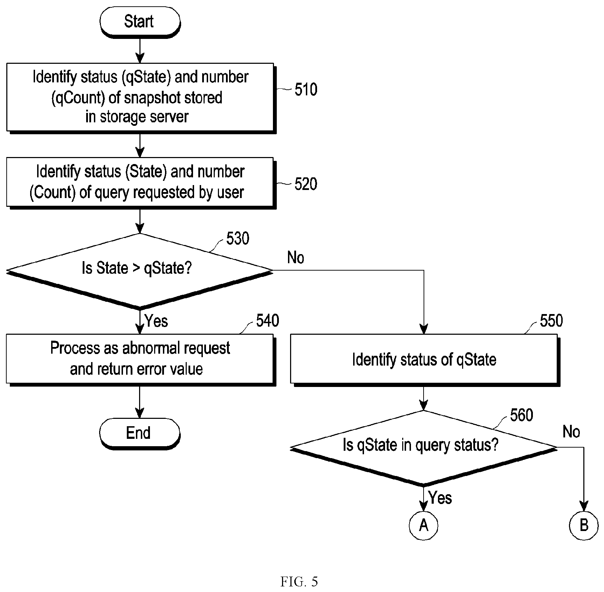

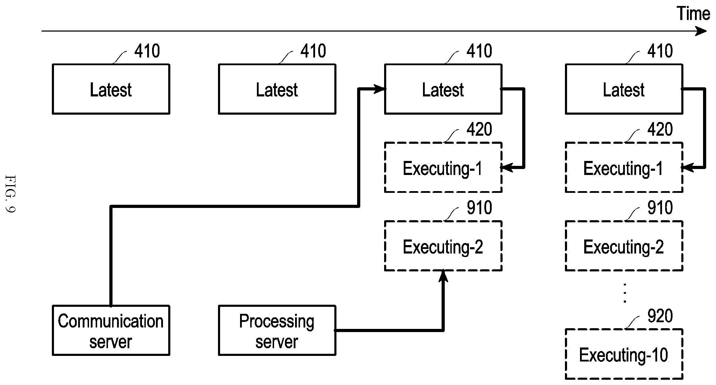

The electronic device 101 (e.g., the communication server 220) according to an embodiment of the disclosure may, in operation 330, access (e.g., obtain a snapshot) a first snapshot (e.g., a latest snapshot 410) or a second snapshot (e.g., a snapshot 910 including query data) stored in a storage server 240, based on identification of URI information. The electronic device 101 (e.g., the communication server 220) according to an embodiment of the disclosure may, in operation 340, return the obtained first snapshot or the obtained second snapshot to the user client 210. The user client 210 according to an embodiment of the disclosure may transmit, to the communication server 220, a GET request including a nextURI (e.g., "communication server address/queryID/userID/QUEUED/0") among snapshots (e.g., the initial snapshot 410a) transmitted from the communication server 220. In other words, the user client 210 may transmit a GET request using the nextURI. The communication server 220 according to an embodiment of the disclosure may parse the nextURI to identify a query status (e.g., QUEUED) and a number (e.g., 0). The communication server 220 according to an embodiment of the disclosure may determine, based on the query status and the number, which of a latest snapshot (e.g., the first snapshot 410 of FIG. 9) and a snapshot including query data (e.g., the second snapshot 420) to return. A function or operation of determining which of a latest snapshot (e.g., the first snapshot 410 of FIG. 9) and a snapshot including query data (e.g., the second snapshot 420) to return by the communication server 220 according to an embodiment of the disclosure will be described in more detail with reference to FIGS. 5 to 7B below. When it is determined that a latest snapshot is to be returned, the communication server 220 according to an embodiment of the disclosure may access "userID/queryID/latest" of the storage server 240 to obtain and/or load a snapshot (e.g., the latest snapshot) corresponding to "userID/queryID/latest". Alternatively, when a processing server 250 performs a process for a query and a second snapshot 420 including query data is stored in the storage server 240, the communication server 220 according to an embodiment of the disclosure may obtain the second snapshot 420 including the query data from the storage server 240 and return the second snapshot 420 to the user client 210.

The communication server 220 according to an embodiment of the disclosure may repeatedly perform operations 310 to 340, and accordingly, a query may be terminated. For example, when the communication server 220 according to an embodiment of the disclosure returns the second snapshot 420 including query data (e.g., EXECUTING-1) to the user client 210, the second snapshot 420 (e.g., EXECUTING-1) including the query data may include, as a nextURI, "communication server address/userID/queryID/EXECUTING/2". The user client 210 according to an embodiment of the disclosure may transmit a GET request to "communication server address/userID/queryID/EXECUTING/2". In this case, assuming that the Trino server 260 and the processing server 250 according to an embodiment of the disclosure have completed processing up to EXECUTING-5 (e.g., when the third snapshot 910 and the fourth snapshot 920 including query data are stored in the storage server 240), since EXECUTING-2 includes data, the communication server 220 according to an embodiment of the disclosure may access "userID/queryID/EXECUTING/2" of the storage server 240 and return (e.g., transmit) a snapshot including the data to the user client 210. For example, the communication server 220 according to an embodiment of the disclosure may determine, based on functions or operations illustrated in FIGS. 5 to 7B, which snapshot (e.g., "userID/queryID/EXECUTING/2") to return to the user client 210. The user client 210 according to an embodiment of the disclosure may obtain an EXECUTING-2 snapshot (e.g., the third snapshot 910), and may transmit a GET request to "communication server address/userID/queryID/EXECUTING/3", which is a nextURI included in the EXECUTING-2 snapshot (e.g., the third snapshot 910). According to an embodiment of the disclosure, as such a process is repeatedly performed, when the user client 210 obtains "communication server address/userID/queryID/EXECUTING/5" (e.g., the fourth snapshot 920), since "communication server address/userID/queryID/EXECUTING/5" (e.g., the fourth snapshot 920) is a snapshot in which a nextURI field is empty, the query may be terminated. As described above, in the serverless system 200 according to an embodiment of the disclosure, all snapshots including query data may be stored in the storage server 240.

FIG. 5 is an exemplary diagram illustrating a function or operation in which, when a query status requested by the user client 210 is higher than a status of a snapshot stored in the storage server 240, the electronic device 101 (e.g., the communication server 220) according to an embodiment of the disclosure returns an error value to the user client 210.

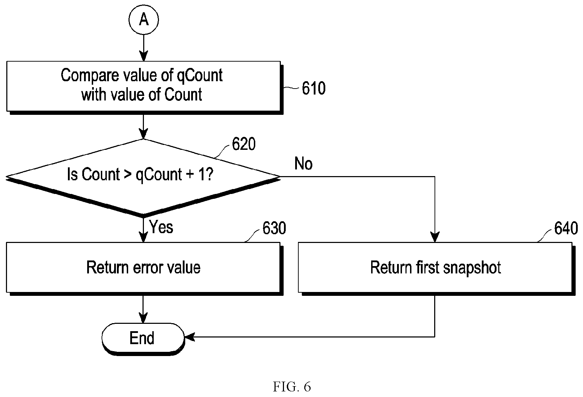

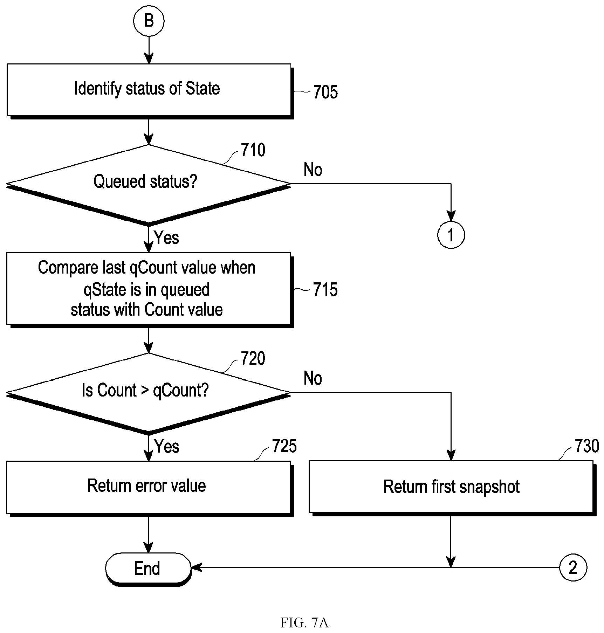

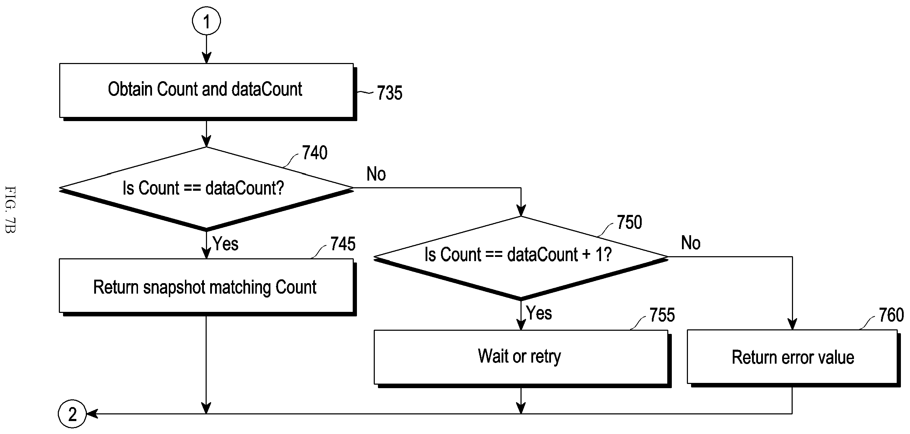

Referring to FIG. 5, the communication server 220 according to an embodiment of the disclosure may, in operation 510, when a GET request is obtained from the user client 210, identify a status (qState) and a number (qCount) of a snapshot stored in the storage server 240. The communication server 220 according to an embodiment of the disclosure may, in operation 520, identify a status (State) and a number (Count) of a query requested by the user client 210. The communication server 220 according to an embodiment of the disclosure may identify the status (State) and the number (Count) of the query requested by the user client 210 using nextURI information included in the user request. The communication server 220 according to an embodiment of the disclosure may, in operation 530, determine whether the status (State) of the query requested by the user client 210 is a status later than the status (qState) of the snapshot stored in the storage server 240. The "status" according to an embodiment of the disclosure may include a queued status, an executing status without data, and an executing status with data, wherein the queued status may be a status prior to the executing status without data, and the executing status with data may be a status subsequent to the executing status without data. The communication server 220 according to an embodiment of the disclosure may determine that the status (State) of the query requested by the user client 210 is higher than the status (qState) of the snapshot stored in the storage server 240 when the status (State) of the query requested by the user client 210 is an executing status and the status (qState) of the snapshot stored in the storage server 240 is a queued status. The communication server 220 according to an embodiment of the disclosure may, in operation 540, when the status (State) of the query requested by the user client 210 is an executing status and the status (qState) of the snapshot stored in the storage server 240 is a queued status (operation 530-Yes), determine that a snapshot corresponding to a time after actual execution of the query is requested, process the GET request of the user client 210 as an abnormal request, and return an error value to the user client 210. The communication server 220 according to an embodiment of the disclosure may, in operation 550, when the status (State) of the query requested by the user client 210 is a queued status and the status (qState) of the snapshot stored in the storage server 240 is a queued status or an executing status (operation 530-No), identify the status (qState) of the snapshot stored in the storage server 240. The communication server 220 according to an embodiment of the disclosure may, in operation 560, determine whether the status (qState) of the snapshot stored in the storage server 240 is a queued status. Operations subsequent to operation 560 according to an embodiment of the disclosure will be described in more detail with reference to FIG. 6, FIG. 7A, and FIG. 7B.

FIG. 6 is an exemplary diagram illustrating a function or operation in which, when a query status requested by the user client 210 is equal to or prior to a status of a snapshot stored in the storage server 240, based on the status of the snapshot stored in the storage server 240 being a queued status (operation 560-Yes), the electronic device 101 (e.g., a communication server 220) according to an embodiment of the disclosure returns an error value or a latest snapshot to the user client 210.

Referring to FIG. 6, the communication server 220 according to an embodiment of the disclosure may, in operation 610, compare a number (qCount) of a snapshot stored in the storage server 240 with a number (Count) of a query requested by the user client 210. The communication server 220 according to an embodiment of the disclosure may, in operation 620, determine whether the number (Count) of the query requested by the user client 210 is greater than a value obtained by adding 1 to the number (qCount) of the snapshot stored in the storage server 240. The communication server 220 according to an embodiment of the disclosure may, in operation 630, when it is determined that the number (Count) of the query requested by the user client 210 is greater than the value obtained by adding 1 to the number (qCount) of the snapshot stored in the storage server 240 (operation 620-Yes), determine that the user client 210 has requested a snapshot that has not yet been generated, and may return an error value to the user client 210. The communication server 220 according to an embodiment of the disclosure may, in operation 640, when it is determined that the number (Count) of the query requested by the user client 210 is not greater than the value obtained by adding 1 to the number (qCount) of the snapshot stored in the storage server 240 (operation 620-No), determine that a past snapshot or a snapshot of a currently executing query has been requested based on a current time point, and may return a latest snapshot (e.g., the first snapshot 410) stored in the storage server 240 to the user client 210.

FIGS. 7A and 7B are exemplary diagrams for describing a function or operation in which, when a query status requested by a user client 210 is equal to or prior to a status of a snapshot stored in a storage server 240, based on the status of the snapshot stored in the storage server 240 being an executing status (e.g., operation 560-No), an electronic device 101 (e.g., a communication server 220) according to an embodiment of the disclosure returns one of an error value, a latest snapshot, or a snapshot including query data to the user client 210.

Referring to FIGS. 7A and 7B, the communication server 220 according to an embodiment of the disclosure may, in operation 705, identify a query status (state) requested by the user client 210. The communication server 220 according to an embodiment of the disclosure may, in operation 710, determine whether the query status (state) requested by the user client 210 is a queued status. The communication server 220 according to an embodiment of the disclosure may, in operations 715 and 720, when the query status (state) requested by the user client 210 is a queued status (e.g., operation 710-Yes), compare a number (Count) of the query requested by the user client 210 with a number (qCount) of a last snapshot stored in the storage server 240 when the status (qState) of the snapshot stored in the storage server 240 is a queued status. The communication server 220 according to an embodiment of the disclosure may, in operation 725, when it is determined that the number (Count) of the query requested by the user client 210 is greater than the number (qCount) of the last snapshot stored in the storage server 240 when the status (qState) of the snapshot stored in the storage server 240 is a queued status (e.g., operation 720-Yes), determine that the user client 210 has requested a non-existent snapshot, and may return an error value to the user client 210. The communication server 220 according to an embodiment of the disclosure may, in operation 730, when it is determined that the number (Count) of the query requested by the user client 210 is equal to or less than the number (qCount) of the last snapshot stored in the storage server 240 when the status (qState) of the snapshot stored in the storage server 240 is a queued status (e.g., operation 720-No), return a latest snapshot (e.g., the first snapshot 410) stored in the storage server 240 to the user client.

The communication server 220 according to an embodiment of the disclosure may, in operation 735, when a query status (state) requested by a user client 210 is an executing status (e.g., operation 710-No), compare a number (Count) of the query requested by the user client 210 with a number (dataCount) of the first snapshot (e.g., the most recently generated/stored snapshot) that includes query data among at least one snapshot in an executing status stored in the storage server 240. The communication server 220 according to an embodiment of the disclosure may, in operation 745, when it is determined that the number (Count) of the query requested by the user client 210 is equal to the number (dataCount) of the first snapshot (e.g., the most recently generated/stored snapshot) that includes query data among at least one snapshot in an executing status stored in the storage server 240 (e.g., operation 740-Yes), return the snapshot matching the number (Count) of the query requested by the user client 210 to the user client 210. The communication server 220 according to an embodiment of the disclosure may, in operation 750, when it is determined that the number (Count) of the query requested by the user client 210 is not equal to the number (dataCount) of the latest snapshot (e.g., the most recently generated/stored snapshot) including query data among at least one snapshot in an executing status stored in the storage server 240 (e.g., operation 740-No), determine whether the number (Count) of the query requested by the user client 210 is equal to a value obtained by adding 1 to the number (dataCount) of the first snapshot (e.g., a second snapshot 420 as the most recently generated/stored snapshot) that includes query data among at least one snapshot in an executing status stored in the storage server 240. The communication server 220 according to an embodiment of the disclosure may, in operation 755, when it is determined that the number (Count) of the query requested by the user client 210 is equal to the value obtained by adding 1 to the number (dataCount) of the latest snapshot (e.g., the most recently generated/stored snapshot) including query data among at least one snapshot in an executing status stored in the storage server 240 (e.g., operation 750-Yes), determine that a snapshot that is currently being processed is requested, and may wait for a specified time until processing of the query is completed, and then return a newly generated snapshot to the user client 210. In this case, according to an embodiment of the disclosure, when the specified time is exceeded or the number of retries for obtaining the newly generated snapshot exceeds a specified number, the communication server 220 may return a request retry code 503 to the user client 210 to cause the user client 210 to access the snapshot again. The communication server 220 according to an embodiment of the disclosure may, in operation 760, when it is determined that the number (Count) of the query requested by the user client 210 is different from the value obtained by adding 1 to the number (dataCount) of the first snapshot (e.g., the most recently generated/stored snapshot) that includes query data among at least one snapshot in an executing status stored in the storage server 240 (e.g., operation 750-No), return an error value to the user client 210.

FIG. 8 is an exemplary diagram illustrating a function or operation in which a server (e.g., a processing server) according to an embodiment of the disclosure overwrites an existing snapshot with a current snapshot and stores only a latest snapshot in a server (e.g., a storage server).

Referring to FIG. 8, the processing server 250 according to an embodiment of the disclosure may, based on whether query data exists in a snapshot, overwrite a value in "userID/queryID/latest" (in other words, a key) when the query data does not exist in the snapshot. According to an embodiment of the disclosure, when the value is overwritten in "userID/queryID/latest", a nextURI number of the snapshot may continuously increase. The processing server 250 according to an embodiment of the disclosure may store an initial snapshot 410a stored in the storage server 240 by the communication server 220 as the latest snapshot (e.g., the first snapshot 410). The processing server 250 according to an embodiment of the disclosure may overwrite the first snapshot 410 with a snapshot not including query data (e.g., the (1-1)th snapshot 410b). Repeatedly, the processing server 250 according to an embodiment of the disclosure may overwrite the first snapshot 410 with a snapshot not including query data (e.g., the (1-10)th snapshot 410c). As described above, the processing server 250 according to an embodiment of the disclosure may update snapshots stored in the storage server 240 such that only the latest snapshot (e.g., the first snapshot 410) is stored in the storage server 240, and thus the communication server 220 and/or the user client 210 may access a snapshot including query data (e.g., a second snapshot 420) through at least single GET request. According to such a feature of the disclosure, a relatively shorter delay time may be ensured as compared to a case in which, as in the related art, snapshots not including query data are sequentially accessed and then a snapshot including query data (e.g., the second snapshot 420) is accessed. According to an embodiment of the disclosure, since snapshots in which query data does not exist may be information that simply records the progress of a query and thus may not affect an actual query result, and thus there may not cause any problem even when duplicated snapshots are continuously returned to the user client 210.

FIG. 9 is an exemplary diagram illustrating a function or operation in which the electronic device 101 (e.g., the communication server 220) according to an embodiment of the disclosure accesses a snapshot including query data through a latest snapshot.

When the communication server 220 according to an embodiment of the disclosure returns the first snapshot 410 not including query data to the user client 210, the first snapshot 410 not including query data (e.g., a latest snapshot) may include, as a nextURI, "communication server address/userID/queryID/EXECUTING/1". The user client 210 according to an embodiment of the disclosure may transmit a GET request to "communication server address/userID/queryID/EXECUTING/1". In this case, assuming that the Trino server 260 and the processing server 250 according to an embodiment of the disclosure have completed processing up to EXECUTING-5 (e.g., where snapshots including query data up to a third snapshot 910 and a fourth snapshot 920 are stored in the storage server 240), the communication server 220 according to an embodiment of the disclosure may access "userID/queryID/EXECUTING/1" of the storage server 240 and return (e.g., transmit) a snapshot including data to the user client 210. The user client 210 according to an embodiment of the disclosure may obtain an EXECUTING-1 snapshot (e.g., the second snapshot 420), and may transmit a GET request to "communication server address/userID/queryID/EXECUTING/2", which is a nextURI included in the EXECUTING-1 snapshot (e.g., the second snapshot 420). According to an embodiment of the disclosure, as such a process is repeatedly performed, when the user client 210 according to an embodiment of the disclosure obtains "communication server address/userID/queryID/EXECUTING/5" (e.g., the fourth snapshot 920), since "communication server address/userID/queryID/EXECUTING/5" (e.g., the fourth snapshot 920) is a snapshot in which a nextURI field is empty, the query may be terminated. As described above, in the serverless system 200 according to an embodiment of the disclosure, all snapshots including query data may be stored in the storage server 240.

According to an embodiment of the disclosure, an electronic device 101 (e.g., the communication server 220 of FIG. 2) may include a communication module (e.g., the communication module 190 of FIG. 1), at least one processor (e.g., the processor 120 of FIG. 1), and memory (e.g., the memory 130 of FIG. 1), wherein the memory includes instructions configured to, when executed, cause the electronic device to obtain a request to provide data for a query from a user client through the communication module, identify, based on the obtaining of the request to provide data, URI information included in the request to provide data of the user client, wherein the URI information includes status information of the query and number information of the query, and access, based on the identification of the URI information, a first snapshot or a second snapshot stored in a storage server, wherein the first snapshot is updated to another snapshot that does not include result data for the query, which is generated according to processing of the query, and the second snapshot includes a snapshot including first result data for the query.

According to an embodiment of the disclosure, the instructions may be further configured to, when executed by the at least one processor, cause the electronic device to, when a query status included in the URI information is higher than a query status stored in the storage server, return an error value to the user client.

According to an embodiment of the disclosure, the instructions may be further configured to, when executed by the at least one processor, cause the electronic device to, when the query status is identified as a query queued status, compare a query number included in the URI information with a snapshot number of the first snapshot, and return the first snapshot to user client, based on a result of the comparison.

According to an embodiment of the disclosure, the instructions may be further configured to, when executed by the at least one processor, cause the electronic device to, when the query status is identified as a query execution status, compare the query number included in the URI information with a snapshot number of the second snapshot, and return the second snapshot to user client, based on a result of the comparison.

According to an embodiment of the disclosure, the instructions may be further configured to, when executed by the at least one processor, cause the electronic device to, when the query status is identified as a query execution status, compare a query number included in the URI information with a snapshot number of the second snapshot, and return, after waiting for a specified time period, the second snapshot to the user client, based on a result of the comparison.

According to an embodiment of the disclosure, the storage server may be configured to store a third snapshot that is different from the second snapshot and includes second result data for the query.

According to an embodiment of the disclosure, the instructions may be further configured to, when executed by the at least one processor, cause the electronic device to, when the query status is identified as the query execution status, compare a query number included in URI information included in the returned second snapshot with a snapshot number of the third snapshot, and return the third snapshot to the user client based on a result of the comparison.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a communication module;
at least one processor, and
memory storing instructions, when executed by the at least one processor, cause the electronic device to:
obtain a request to provide data for a query from a user client through the communication module,
based on the request to provide data, identify URI information included in the request to provide data of the user client, wherein the URI information includes status information of the query and number information of the query,
based on the identification of the URI information, access a first snapshot or a second snapshot stored in a storage server, and
return the first snapshot or the second snapshot to the user client,
wherein the first snapshot is updated with another snapshot that does not include result data for the query, which is generated according to processing of the query, and
wherein the second snapshot includes a snapshot including first result data for the query.

2. The electronic device of claim 1, wherein the instructions, when executed by the at least one processor, cause the electronic device to, when a query status included in the URI information is a higher status than a query status stored in the storage server, return an error value to the user client.

3. The electronic device of claim 1 or claim 2, wherein the instructions, when executed by the at least one processor, cause the electronic device to, when the query status is identified as a query queued status, compare a query number included in the URI information with a snapshot number of the first snapshot, and return the first snapshot to user client based on a result of the comparison.

4. The electronic device of anyone of claim 1 to claim 3, wherein the instructions, when executed by the at least one processor, cause the electronic device to, when the query status is identified as a query execution status, compare the query number included in the URI information with a snapshot number of the second snapshot, and return the second snapshot to user client based on a result of the comparison.

5. The electronic device of anyone of claim 1 to claim 4, wherein the instructions, when executed by the at least one processor, cause the electronic device to, when the query status is identified as a query execution status, compare a query number included in the URI information with a snapshot number of the second snapshot, and return, after waiting for a specified time period, the second snapshot to the user client based on a result of the comparison.

6. The electronic device of anyone of claim 1 to claim 5, wherein the storage server is configured to store a third snapshot that is different from the second snapshot and includes second result data for the query.

7. The electronic device of anyone of claim 1 to claim 6, wherein the instructions, when executed by the at least one processor, cause the electronic device to, when the query status is identified as the query execution status, compare a query number included in URI information included in the returned second snapshot with a snapshot number of the third snapshot, and return the third snapshot to the user client based on a result of the comparison.

8. A non-transitory computer-readable recording medium storing instructions, wherein the instructions are configured to, when executed by a processor of an electronic device, cause the electronic device to:
obtain a request to provide data for a query from a user client through a communication module of the electronic device,
based on the obtaining of the request to provide data, identify URI information included in the request to provide data of the user client, wherein the URI information includes status information of the query and number information of the query, and
based on the identification of the URI information, access a first snapshot or a second snapshot stored in a storage server,
wherein the first snapshot is updated with another snapshot that does not include result data for the query, which is generated according to processing of the query, and
wherein the second snapshot includes a snapshot including first result data for the query.

9. The non-transitory computer-readable recording medium of claim 8, wherein the instructions, when executed by the at least one processor, cause the electronic device to, when a query status included in the URI information is a higher status than a query status stored in the storage server, return an error value to the user client.

10. The non-transitory computer-readable recording medium of claim 8 or 9, wherein the instructions, when executed by the at least one processor, cause the electronic device to, when the query status is identified as a query queued status, compare a query number included in the URI information with a snapshot number of the first snapshot, and return the first snapshot to user client based on a result of the comparison.

11. The non-transitory computer-readable recording medium of anyone of claims 8 to 10, wherein the instructions, when executed by the at least one processor, cause the electronic device to, when the query status is identified as a query execution status, compare the query number included in the URI information with a snapshot number of the second snapshot, and return the second snapshot to user client based on a result of the comparison.

12. The non-transitory computer-readable recording medium of anyone of claims 8 to 11, wherein the instructions, when executed by the at least one processor, cause the electronic device to, when the query status is identified as a query execution status, compare a query number included in the URI information with a snapshot number of the second snapshot, and return, after waiting for a specified time period, the second snapshot to the user client based on a result of the comparison.

13. The non-transitory computer-readable recording medium of anyone of claims 8 to 12, wherein the storage server is configured to store a third snapshot that is different from the second snapshot and includes second result data for the query.

14. The non-transitory computer-readable recording medium of anyone of claims 8 to 13, wherein the instructions, when executed by the at least one processor, cause the electronic device to, when the query status is identified as the query execution status, compare a query number included in URI information included in the returned second snapshot with a snapshot number of the third snapshot, and return the third snapshot to the user client based on a result of the comparison.

15. A method for controlling an electronic device, the method comprising:
obtaining a request to provide data for a query from a user client through a communication module of the electronic device,
based on the obtaining of the request to provide data, identifying URI information included in the request to provide data of the user client, wherein the URI information includes status information of the query and number information of the query,
based on the identification of the URI information, accessing a first snapshot or a second snapshot stored in a storage server, and
returning the first snapshot or the second snapshot to the user client,
wherein the first snapshot is updated with another snapshot that does not include result data for the query, which is generated according to processing of the query, and
wherein the second snapshot includes a snapshot including first result data for the query.
